# EUROPEAN PATENT SPECIFICATION

(11) **EP 1 724 706 B1**
(45) Date of publication and mention of the grant of the patent: **27.02.2008**
(21) Application number: 05252975.7
(22) Date of filing: 13.05.2005
(51) Int. Cl.: G06K 19/07

(54) **Power supply circuit in IC chip for non-contact IC card**
Stromversorgungsschaltung in einem IC-Chip für eine kontaktlose IC-Karte
Circuit d'alimentation dans un circuit intégré pour carte à puce sans contact

(43) Date of publication of application: 22.11.2006
(73) Proprietor: Fec Co., Ltd., Ishikawa-ken (JP); The Government of Malaysia, 62502 Putrajaya (MY)
(72) Inventor: Sugimura, Shiro, c/o FEC Co., Ltd., Kanazawa-shi Ishikawa-ken (JP); Kobayashi, Hideki, c/o FEC Co., Ltd., Kanazawa-shi Ishikawa-ken (JP); Taniguchi, Shuhei, c/o FEC Co., Ltd., Kanazawa-shi Ishikawa-ken (JP)
(74) Representative: Haines, Miles John L.S.

(56) References cited:
- US-B1- 6 480 699
- PATENT ABSTRACTS OF JAPAN vol. 1997, no. 12, 25 December 1997 (1997-12-25) & JP 09 214394 A (OKI ELECTRIC IND CO LTD), 15 August 1997 (1997-08-15)
- PATENT ABSTRACTS OF JAPAN vol. 2002, no. 08, 5 August 2002 (2002-08-05) & JP 2002 099886 A (SEIKO EPSON CORP), 5 April 2002 (2002-04-05)

## Description

### BACKGROUND OF THE INVENTION

### 1. Field of the Invention

This invention relates to a power supply circuit in an IC chip adapted for a non-contact IC card, and in particular relates to a power supply circuit in an IC chip adapted for a non-contact IC card enabling smaller capacitance of the smoothing capacitor and reduced IC chip size.

### 2. Description of the Related Art

Nbn-contact IC cards are widely used. Such cards incorporate an IC chip having memory functions and communication functions into a card or sheet of base material, and are capable of wireless data exchange with a reader/writer. However, what are here called IC cards comprise, in addition to so-called IC cards and IC tags, paper currency, securities and similar incorporating IC chips.

Normally, the IC chip in an IC card receives carrier radio waves from the reader/writer, and rectifies the waves to generate an operating power supply voltage (as for example in US 6480699 (Lovoi)).

When using this technology of the prior art, there is often the problem that, if the frequency of the carrier radio wave from the reader/writer is low, the required capacitance of the smoothing capacitor is large, and so the capacitor cannot be mounted in the IC chip. For example, if the frequency of the carrier radio wave is 13.56 MHz, the capacitance of the smoothing capacitor is required to be 100 pF or greater, and it is physically impossible to mount a capacitor with such a large capacitance on an IC chip measuring approximately 0.5 mm on a side.

Hence one object of this invention is, in light of the above problem of the prior art, to provide a power supply circuit in an IC chip for non-contact IC cards having a smaller smoothing capacitor capacitance and which can be mounted without difficulty in an IC chip, even when the frequency of the reader/writer carrier radio wave is low.

### SUMMARY OF THE INVENTION

In order to achieve this object, a configuration of this invention comprises an antenna, a diode for rectifying the output voltage of the antenna, a series transistor inserted on the output side of the diode, and a smoothing capacitor connected to the base of the series transistor; the smoothing capacitor is mounted integrally on the IC chip together with the main portion having memory functions and communication functions.

The smoothing capacitor can have a capacitance of order several pF, and can be realized by stray capacitance in the circuit.

Further, a supplementary transistor to supply a base current may be provided as an adjunct to the series transistor; the supplementary transistor may have voltage-limiter functions.

Further, the output side of the diode may be connected to the output side of another diode for rectifying the output voltage of an external antenna.

By means of the configuration of this invention, the smoothing capacitor connected to the base of the series transistor need only have capacitance equal to 1/β of the capacitance of the smoothing capacitor when a series transistor is not used (where β is the current gain of the series transistor). That is, the series transistor increases the equivalent capacitance of the smoothing capacitor, so that a satisfactory ripple reduction effect can be obtained; when the carrier radio wave frequency for the reader/writer is 13.56 MHz, the capacitance of the smoothing capacitor required in the prior art, of 100 pF or greater, can be reduced to the order of several pF, so that the capacitor can easily be mounted integrally on the IC chip. Further, such a low-capacitance smoothing capacitor can also be realized as stray capacitance in the circuitry within the IC chip.

A supplementary transistor provided as an adjunct to the series transistor supplies the base current to the series transistor, and improves the stability of operation overall. A supplementary transistor can also realize voltage-limiter functions by limiting the base voltage to a fixed voltage.

If another diode is provided to rectify the output voltage of an external antenna, the carrier radio wave received from the reader/writer via the external antenna can also be utilized as an operating power supply voltage, so that the distance over which communication with the reader/writer is performed can be increased. The external antenna is incorporated within the base material and connected to a terminal provided on the IC chip.

### BRIEF DESCRIPTION OF THE DRAWINGS

Fig. 1 is an overall system diagram; and,
Fig. 2 is a system diagram showing principal portions in another aspect.

### DESCRIPTION OF THE PREFERRED EMBODIMENTS

Below, aspects of the invention are explained using the drawings.

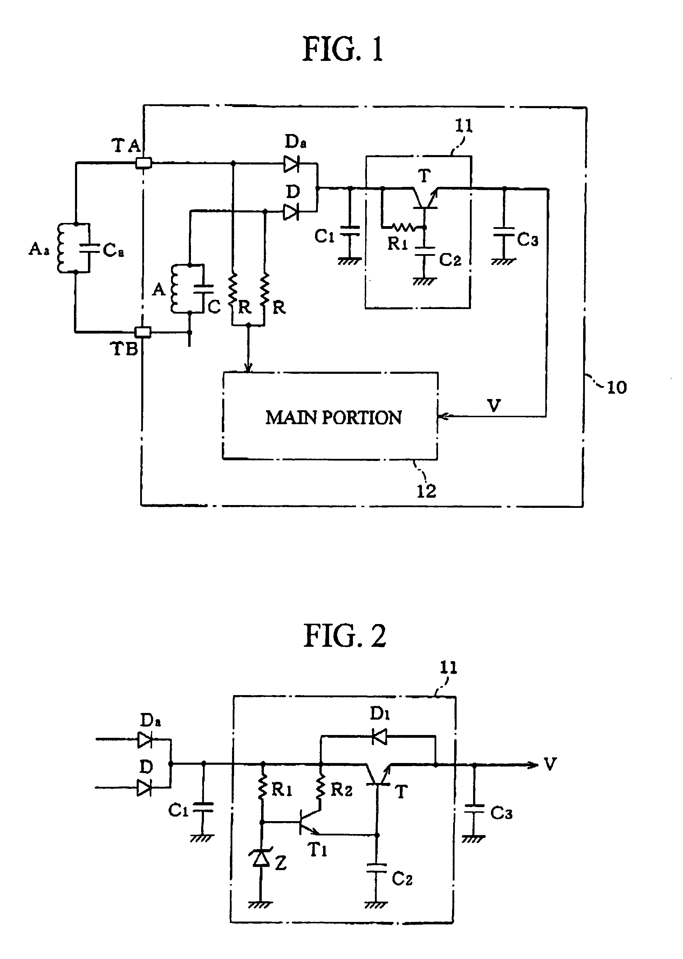

A power supply circuit in an IC chip for a non-contact IC card comprises an antenna A, diode D, series transistor T, and smoothing capacitors C1, C2, C3 (Fig. 1), and is formed integrally on an IC chip 10 together with a main portion 12 having memory functions and communication functions.

The antenna A is connected to a capacitor C for parallel resonance; the end of the antenna A on the ungrounded side is connected through the diode D to the collector of the series transistor T. The output side of the diode D is connected through the terminal TA to the output side of another diode Da connected to the end on the ungrounded side of an external antenna Aa, and is also connected to a smoothing capacitor C1. A resistance R1 is connected between the collector and base of the series transistor T, and a smoothing capacitor C2 is connected to the base of the series transistor T. The output side of the series transistor T, that is, the emitter, is connected to a smoothing capacitor C3, and the emitter of the series transistor T is connected to the main portion 12.

The inputs of the diodes D and Da are connected, via coupling resistances R, R, are combined and connected to the main portion 12. The external antenna Aa is connected to a capacitor Ca for parallel resonance, and the grounded end of the external antenna Aa is connected through the terminal TB to the grounded end of the antenna A.

When a carrier radio wave from a reader/writer, not shown, arrives at one or both of the antenna A and the external antenna Aa, the output voltages of the antenna A and external antenna Aa are rectified by the diodes D, Da, and are smoothed by the smoothing capacitor C1. On the other hand, the series transistor T acts as the equivalent of a smoothing capacitor with capacitance equal to β times the capacitance of the smoothing capacitor C2 (where β is the current gain of the series transistor T), connected in parallel with the smoothing capacitor C3. Hence even when the frequency of the carrier radio wave from the reader/writer is 13.56 MHz, the capacitance of the smoothing capacitor C2 need only be, at most, of order several pF. The smoothing capacitors C1 and C3 are supplementary, and each need only be of order several pF.

Hence each of the smoothing capacitors C1, C2, C3 can easily be realized as stray capacitances of the circuitry within the IC chip 10, without the need to take special steps to form capacitor devices within the IC chip 10. Moreover, a sufficiently stable operating power supply voltage V is generated on the output side of the series transistor T, so that power can be supplied to the main portion 12.

In Fig. 1, the circuit 11 comprising the series transistor T may also be configured with a supplementary transistor T1 added (Fig. 2).

The base and collector of the supplementary transistor T1 are connected through the resistors R1 and R2 respectively to the collector of the series transistor T, and the base of the supplementary transistor T1 is connected through a Zener diode Z to ground. The emitter of the supplementary transistor T1 is connected to the base of the series transistor T. Moreover, a protection diode D1 is connected between the collector and emitter of the series transistor T.

The supplementary transistor T1 realizes a voltage limiter function through the Zener diode Z, and in addition supplies a base current to the series transistor T, and so can increase the effective current gain of the series transistor T, and can contribute to stabilization of operation.

In the above explanation, the external antenna Aa and capacitor Ca connected to the terminals TA and TB are effective for broadening the distance of communication with the reader/writer. An external antenna Aa and capacitor Ca should be provided as necessary.

## Claims

1. A power supply circuit in an IC chip adapted for a noncontact IC card, comprising:
an antenna (A):
a diode (D), which rectifies the output voltage of said antenna;
a series transistor (T), inserted at the output side of said diode; and,
a smoothing capacitor (C2), **characterised in that** the smoothing capacitor is connected to the base of said series transistor; and wherein
said smoothing capacitor is formed integrally on the IC chip, together with a main portion having memory functions and communication functions.

2. The power supply circuit in an IC chip for a noncontact IC card according to Claim 1, wherein said smoothing capacitance has a capacitance on the order of several picofarads.

3. The power supply circuit in an IC chip for a noncontact IC card according to Claim 1 or Claim 2, wherein said smoothing capacitor is realized through stray capacitance of circuitry.

4. The power supply circuit in an IC chip for a noncontact IC card according to Claim 1, wherein a supplementary transistor supplying a base current is provided as an adjunct to said series transistor.

5. The power supply circuit in an IC chip for a noncontact IC card according to Claim 4, wherein said supplementary transistor has a voltage-limiter function.

6. The power supply circuit in an IC chip for a noncontact IC card according to Claim 1, wherein the output side of said diode is connected to the output side of another diode which rectifies the output voltage of an external antenna.

## Patentansprüche

1. Energieversorgungsschaltkreis in einem IC-Chip, der für eine kontaktlose IC-Karte geeignet ist und aufweist:
eine Antenne (A);
eine Diode (D), die die Ausgangsspannung der Antenne gleichrichtet,
ein Reihentransistor (T), der an der Ausgangsseite der Diode eingesetzt ist, und
ein Glättungskondensator (C2), **dadurch gekennzeichnet, dass** der Glättungskondensator mit der Basis des Reihentransistors verbunden ist und wobei
der Glättungskondensator zusammen mit einem Hauptabschnitt mit Speicher- und Datenübertragungsfunktion integral auf dem IC-Chip ausgerichtet ist

2. Energieversorgungsschaltkreis in einem IC-Chip für eine kontaktlose IC-Karte nach Anspruch 1, wobei der Glättungskondensator eine Kapazität in der Größenordnung von mehreren Picofarad hat.

3. Energieversorgungsschaltkreis in einem IC-Chip für eine kontaktlose IC-Karte nach Anspruch 1 oder 2, wobei der Glättungskondensator durch die Streukapazität des Schaltkreises realisiert wird.

4. Energieversorgungsschaltkreis in einem IC-Chip für eine kontaktlose IC-Karte nach Anspruch 1, wobei ein zusätzlicher Transistor, der einen Basisstrom bereitstellt, als Beigabe zu dem Serientransistor bereitgestellt wird.

5. Energieversorgungsschaltkreis in einem IC-Chip für eine kontaktlose IC-Karte nach Anspruch 4, wobei der zusätzliche Transistor eine Spannungsbegrenzungsfunktion hat.

6. Energieversorgungsschaltkreis in einem IC-Chip für eine kontaktlose IC-Karte nach Anspruch 1, wobei die Ausgangsseite der Diode mit der Ausgangsseite einer anderen Diode verbunden ist, die die Ausgangsspannung einer externen Antenne gleichrichtet.

## Revendications

1. Circuit d'alimentation en énergie dans une puce à CI conçu pour une carte à CI sans contact, comportant :
une antenne (A);
une diode (D) qui redresse la tension de sortie de ladite antenne ;
un transistor (T) en série inséré du côté de la sortie de ladite diode ; et
un condensateur de lissage (C2), **caractérisé en ce que** le condensateur de lissage est connecté à la base dudit transistor en série ; et dans lequel
ledit condensateur de lissage est formé de façon intégrée sur la puce à CI, en même temps qu'une partie principale ayant des fonctions de mémoire et des fonctions de communication.

2. Circuit d'alimentation en énergie dans une puce à CI pour une carte à CI sans contact selon la revendication 1, dans lequel ledit condensateur de lissage a une capacité de l'ordre de plusieurs picofarads.

3. Circuit d'alimentation en énergie dans une puce à CI pour une carte à CI sans contact selon la revendication 1 ou la revendication 2, dans lequel ledit condensateur de lissage est réalisé au moyen d'une capacité parasite de circuits.

4. Circuit d'alimentation en énergie dans une puce à CI pour une carte à CI sans contact selon la revendication 1, dans lequel un transistor supplémentaire fournissant un courant de base est prévu en tant qu'adjonction audit transistor en série.

5. Circuit d'alimentation en énergie dans une puce à CI pour une carte à CI sans contact selon la revendication 4, dans lequel ledit transistor supplémentaire a une fonction de limitation de tension.

6. Circuit d'alimentation en énergie dans une puce à CI pour une carte à CI sans contact selon la revendication 1, dans lequel le côté de sortie de ladite diode est connecté au côté de sortie d'une autre diode qui redresse la tension de sortie d'une antenne extérieure.
